# EUROPEAN PATENT APPLICATION

(11) **EP 3 757 535 A1**
(43) Date of publication of application: **30.12.2020**
(21) Application number: 18907415.6
(22) Date of filing: 20.02.2018
(51) Int. Cl.: G01L 1/04, G01L 5/04, G01L 5/10

(54) **LOAD CELL**

(71) Applicant: Dinacell Electronica, S.L., 28522 Rivas Vaciamadrid Madrid (ES)
(72) Inventor: GONZÁLEZ GALLEGOS, Rafael, 28529 Rivas Vaciamadrid (ES)
(74) Representative: Elzaburu S.L.P.
(86) International application number: PCT/ES2018/070122
(87) International publication number: WO 2019/162535

(57) **Abstract**

A load cell that is detachable from a suspension belt cable that is subjected to tension resulting from a suspended load; comprising a cell body (12) with a rectangular parallelepiped configuration wherein the length is greater than the width of the cell body (12); at least one first, second and third protruding tabs (13, 14, 15) projecting from a long longitudinal edge of the cell body (12) and configured to mechanically couple with the suspension belt cable; and at least one strain gauge configured to be positioned above an intermediate zone (18, 19) of a long side of the cell body (12); such that the first, second and third protruding tabs (13, 14, 15) are evenly distributed along the long longitudinal edge of the cell body (12) and the first and third protruding tabs (13, 15) are positioned in on a distal plane parallel to the long longitudinal edge of the cell body (12); with the first and third tabs (13, 15) having protrusions (16) that prevent the cell from shifting or coming off of the belt cable.

## Description

### Object

The present invention refers to a load cell for suspension belt cables for elements subjected to loads of the type generated by the car of a lift device for objects or persons.

### State of the art

A load cell for suspension cables of lift such as an elevator, freight elevator or similar, usually used to lift people, objects, loads individually or simultaneously, is known in the state of the art.

The load cell comprises a cell body, which has a rectangular parallelepiped shape; which has at least three through holes spaced respectively from the longitudinal axis of the body; at least three rods such that each rod is inserted into the corresponding hole; and a cavity in which a strain gauge is positioned.

The rods are cylinders such that the distal end protrudes from the upper longitudinal face of the parallelepiped body and the opposite end is flush with the lower side of the body; being staggered with respect to the longitudinal axis of the body from which they protrude or project.

The load cell is a device that is mechanically attached to each suspension element of the lift car; that is, to the suspension cables to constantly measure the load experienced by each suspension cable during normal car operation.

The variations in the tension of the suspension cables are transmitted by the cylindrical rods to the cell body, and the strain gauge transforms the measured deformations into electrical signals which are transmitted to a control unit to provide, in response to the electrical signals received, a warning or alarm signal when the total load in the car exceeds a predetermined threshold value.

### Summary

The present invention seeks to solve one or more of the disadvantages encountered in practice by means of a load cell as defined in the claims.

A load cell detachable from a suspension belt cable that is subjected to stress from a suspended load; comprising a cell body of rectangular parallelepiped configuration where the length is greater than the width of the cell body itself; at least one first, second and third protruding tabs projecting from a long longitudinal edge of the cell body and configured to mechanically engage the suspension cable; and at least one strain gauge configured to be positioned in the cell body so that the first, second and third protruding tabs are evenly distributed along the long longitudinal edge of the cell body and the first and third protruding tabs are positioned in a distal plane parallel to the long longitudinal edge of the cell body without being coincident with the same long longitudinal edge of the cell body.

The strain gauge is positioned in an intermediate zone, one of a long side of the cell body located between the first and second protruding tabs or between the third and second protruding tabs.

The load cell is made in one piece and has a configuration that can be executed from thin flat sheet metal; the load cell is made up of a single piece of sheet metal bent such that the cell body and the first, second and third protruding tabs form a 90° angle. Consequently, the load cell has an **E**-shape at right angles ┘.

The first, second and third protruding tabs are distributed evenly along the long longitudinal edge of the cell body; with the first and third protruding tabs occupying positions close to the short transversal edges of the cell body and, in addition, the first and third protruding tabs are arranged according to the distal plane parallel to the long longitudinal edge of the cell body without aligning with the proximal plane to the long longitudinal edge of the cell body of the second protruding tab; that is, the first, second and third protruding tabs are arranged staggered along the long longitudinal edge of the cell body.

The first and third protruding tabs comprise retaining protrusions, respectively, to prevent the load cell from moving from its working position, secured to the suspension belt cable, ensuring the integrity of the electrical wiring of the strain gauge. The belt cable is located between the cell body and the retaining protrusions. The retaining protrusions are located, respectively, on the distal inner corners of the first and third protruding tabs.

### Brief description of the drawings

A more detailed explanation of the device in accordance with embodiments of the invention is given in the following description based on the attached figures, in which:
Figure 1 shows a side view of the load cell;
Figure 2 shows a perspective view of the load cell;
Figure 3 shows another perspective view of the load cell;
Figure 4 shows a plan view of the load cell;
Figure 5 shows another side view of the load cell; and
Figure 6 shows a profile view of the load cell.

### Detailed Description

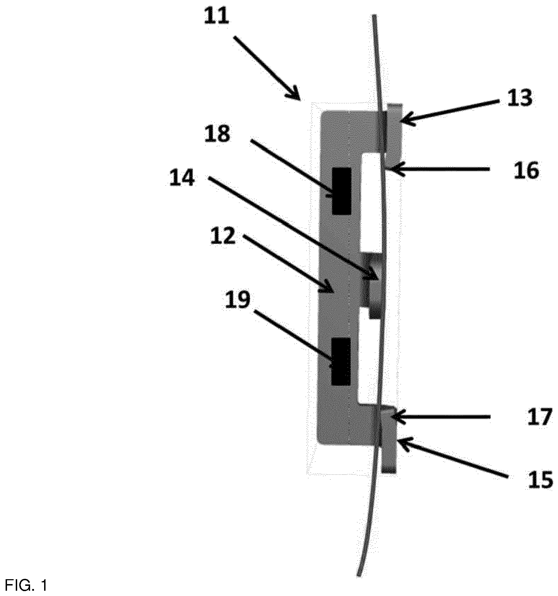

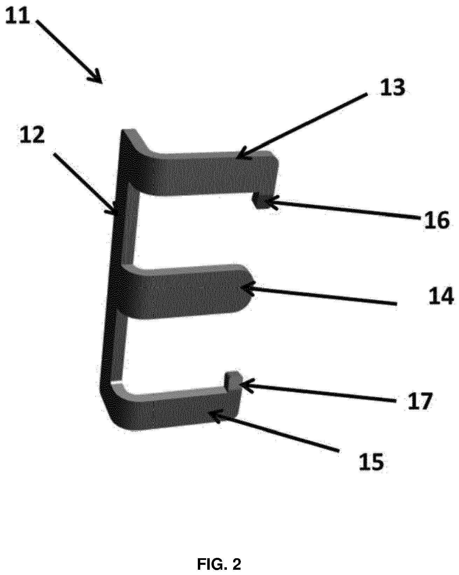

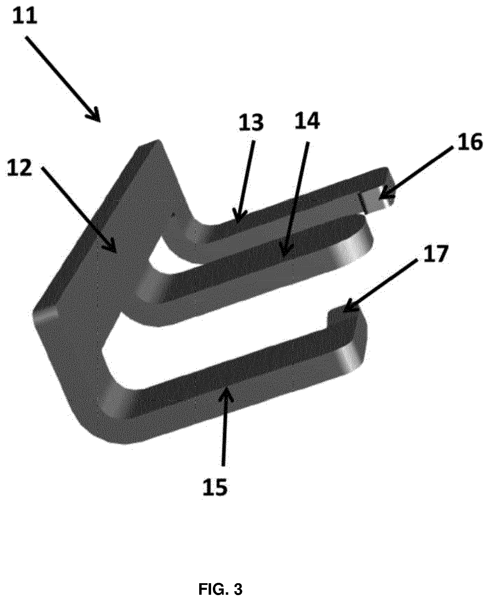

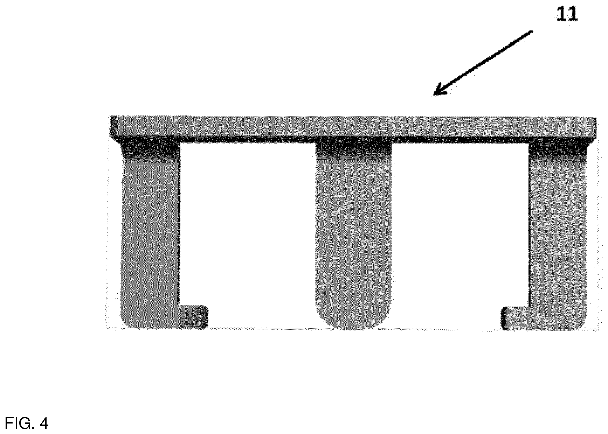

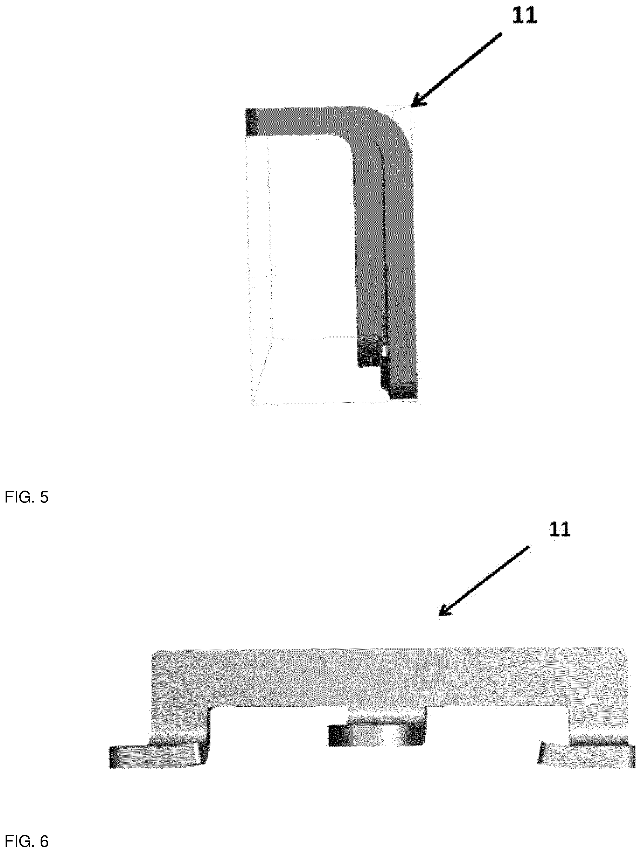

In regard to figures 1 to 6, which show a load cell 11 detachable from a suspension belt cable subjected to tension resulting from suspended loads of the type generated by the car of a lift device for objects or persons; that comprises a cell body 12 with a rectangular parallelepiped configuration wherein the length is greater than the width of the cell body 12; at least one first, second and third protruding tabs 13, 14, 15 projecting from a long longitudinal edge of the cell body 12 and configured to mechanically couple with the suspension belt cable; and at least one strain gauge configured to be positioned above an intermediate zone 18, 19 of a long side of the cell body 12 between the second protruding tab 14 and a protruding tab 13, 15 located on one of the short transversal edges; such that the load cell 11 is detachable from the suspension belt cable subjected to tension generated by a suspended load of the type generated by the car of a lift device for objects or persons.

The first, second and third protruding tabs 13, 14, 15 are distributed evenly along the long longitudinal edge of the cell body 12; with the first and third protruding tabs 13, 15 occupying positions close to the short transversal edges of the cell body 12 and, in addition, the first and third protruding tabs 13, 15 are positioned according to the distal plane parallel to the long longitudinal edge of the cell body 12 without aligning with the proximal plane to the long longitudinal edge of the cell body 12 of the second protruding tab 14; that is, the first, second and third protruding tabs 13, 14, 15 are positioned staggered along the long longitudinal edge of the cell body 12.

The first 13 and third 15 protruding tabs comprise, respectively, retaining protrusions 16, 17 to prevent the load cell 11 from moving inadvertently out of the working position; that is, secured to the suspension cable so that the suspension belt cable is located between the cell body 12 and the retaining protrusions 16, 17 of the first 13 and third 15 protruding tabs.

The retaining protrusions 16, 17 are located, respectively, on the inner corners of the first and third protruding tabs 13, 15 close to the second protruding tab 14. Optionally they can be moved away from each other towards the outside. Alternatively, the retaining protrusions 16, 17 have a hook shape extending in plane parallel to a long side of the cell body 12; that is, the retaining protrusions 16, 17 have a 1 shape with a tab extending parallel to the long side of the cell body 12.

The load cell 11 is made in one piece and has a configuration that can be executed from a single piece of thin flat sheet metal, bent such that the cell body 12 and the first, second and third protruding tabs 13, 14, 15 form a 90° angle; wherein the first and third protruding tabs 13, 15 are positioned at opposite ends of the long longitudinal edge of the cell body 12 and the second protruding tab 14 is positioned between the first and second protruding tabs 13, 15 in the central area of the long longitudinal edge of the cell body 12.

Consequently, the load cell has an **E** shape at a right angle ┘, where the first, second and third protruding tabs 13, 14, 15 are located along a long longitudinal edge of the cell body 12 to form a right angle.

The cell body 12 may comprise at least two intermediate zones 19, 18 where the strain gauge is positioned; with the intermediate zones 19, 18 being located on the long side of the cell body 12, between either of the first and second tabs 13, 14 or third and second tabs 15, 14, so the strain gauge is oriented perpendicular to the first, second and third tabs 13, 14, 15, with the tabs 13, 14, 15 providing three points of support to the suspension belt cable, through which the tension variations of the belt cable are transferred to the cell body 12 for measurement.

The load cell 11 is detachable from the suspension cable, such that the load cell 11, in its working position, secures the suspension cable between the interior sides of the first and third protruding tabs 13, 15 and the exterior sides of the second protruding tab 14, slightly deforming the suspension belt cable which forms an angle different from 180°, so that when tension is applied to the suspension belt cable or a load is placed inside the lift car, it causes the cell body 12 to deform slightly and the suspension cable tends to form an angle of 180° in a side view.

In the working position of the load cell 11, the retaining protrusions 16, 17 work mechanically with the cell body 11 to keep the suspension belt cable between the three protruding tabs 13, 14, 15; with the suspension belt cable being oriented perpendicular to the long side of the cell body 12.

Consequently, the length of the three protruding tabs 13, 14, 15 is similar to the width of the suspension belt cable, with 13 and 15 being extended by the protrusions to prevent the load cell 11 from moving along the suspension belt cable during operation of the lift car.

Strain gauges can be installed on the cell body 12 and configured to measure the deformation of the cell body 12 between each of the protruding tabs 13, 14, 15. The dimensions and material of the load cell 11 are selected to provide the maximum bending of the cell body 12 as a function of the tension of the suspension belt cable, but also to provide sufficient strength to ensure the physical integrity of the load cell 11.

## Claims

1. A load cell that is detachable from a suspension belt cable and that is subjected to tension resulting from a suspended load; **characterised in that** the load cell comprises a cell body (12) with a rectangular parallelepiped configuration wherein the length is greater than the width of the cell body (12); at least one first, second and third protruding tabs (13, 14, 15) projecting from a long longitudinal edge of the cell body (12) and configured to mechanically couple with the suspension belt cable; and at least one strain gauge configured to be positioned above an intermediate zone (18, 19) of a long side of the cell body (12); such that the first, second and third protruding tabs (13, 14, 15) are evenly distributed along the long longitudinal edge of the cell body (12) and the first and third protruding tabs (13, 15) are positioned in on a distal plane parallel to the long longitudinal edge of the cell body (12).

2. The cell, according to claim 1; **characterised in that** the second protruding tab (14) projects from the same long longitudinal edge of the cell body (12).

3. The cell according to claim 1; **characterised in that** the first and third protruding tabs (13, 15) project from the short transversal end edges of the cell body (12).

4. The cell according to claim 1; **characterised in that** the first, second and third protruding tabs (13, 14, 15) are positioned staggered along the long longitudinal edge of the cell body (12).

5. The cell according to claim 1; **characterised in that** the cell body (12) and the first, second and third protruding tabs (13, 14, 15) are manufactured in one piece and have a configuration that can be executed out of thin flat sheet metal.

6. The cell according to claim 5; **characterised in that** the load cell (11) has a right-angle ┘ **E**-shape.

7. The cell according to claim 1; **characterised in that** the intermediate zone (18, 19) of a long side of the cell body (12) is located between the first, second or third and second protruding tabs (13, 14, 15).

8. The cell according to claim 1; **characterised in that** the first (13) and third (15) protruding tabs comprise respective retaining protrusions (16, 17) to prevent the load cell (11) from moving out of the working position.

9. The cell according to claim 8; **characterised in that** the retaining protrusions (16, 17) are located in the inner corners of the first and third protruding tabs (13, 15) close to the second protruding tab (14).

10. The cell according to claim 9; **characterised in that** the retaining protrusions (16, 17) have a hook shape extending in plane parallel to a long side of the cell body (12).

11. The cell according to claim 9; **characterised in that** the retaining protrusions (16, 17) are shaped like a tab that bends in or out, parallel to the long side of the cell body (12).
